# EUROPÄISCHE PATENTSCHRIFT

(11) **EP 0 603 274 B1**
(45) Veröffentlichungstag und Bekanntmachung des Hinweises auf die Patenterteilung: **06.02.2002**
(21) Anmeldenummer: 92919427.2
(22) Anmeldetag: 11.09.1992
(51) Int. Cl.: G02B 1/10

(54) **OPTISCHE ELEMENTE UND VERFAHREN ZU DEREN HERSTELLUNG**
OPTICAL ELEMENTS AND A METHOD OF PRODUCING THEM
ELEMENTS OPTIQUES ET PROCEDE POUR LEUR FABRICATION

(30) Priorität: 13.09.1991 DE 4130550
(43) Veröffentlichungstag der Anmeldung: 29.06.1994
(73) Patentinhaber: INSTITUT FÜR NEUE MATERIALIEN gemeinnützige GmbH, 66123 Saarbrücken (DE)
(72) Erfinder: KRUG, Herbert, D-6625 Püttlingen (DE); NASS, Rüdiger, D-6601 Riegelsberg (DE); SCHMIDT, Helmut, D-6604 Saarbrücken (DE); SPANHEL, Lubomir, D-6602 Dudweiler (DE)
(74) Vertreter: Barz, Peter, Dr.
(86) Internationale Anmeldenummer: EP9202094
(87) Internationale Veröffentlichungsnummer: WO9306508

(56) Entgegenhaltungen:
- EP-A- 0 195 493
- EP-A- 0 499 492
- Patent Abstracts of Japan, Band 12, Nr 43, P664, Zusammenfassung von JP 62-191802, publ 1987-08-22
- Patent Abstracts of Japan, Band 11, Nr 283, P615, Zusammenfassung von JP 62- 79401, publ 1987-04-11

## Beschreibung

Die Erfindung betrifft optische Elemente mit einer geprägten Oberflächenstruktur, z. B. optische Beugungsgitter, Interferometer, Fresnel-Linsen, Ein/Auskoppelgitter für integrierte Optik, optische Filter, Koppler, Verzweiger, Multiplexer, Streifen-Wellenleiter, optische Schalter und Sensoren, CD-Platten, Bragg-Spiegel und holographische Elemente.

Die Herstellung derartiger optischer Elemente aus transparenten Polymeren wie Polymethylmethacrylat (PMMA) oder Polycarbonaten ist bereits bekannt. Ein Nachteil dieser Polymeren ist jedoch ihre relativ hohe thermische Schrumpfung von ca. 15 Vol.%, die eine Endform-nahe Prägung des Werkstoffs mit hoher Präzision nicht gestattet. Es sind auch bereits anorganisch/organische Kompositmaterialien als Werkstoffe vorgeschlagen worden, jedoch beträgt hier die Schrumpfung bis zu 50 Vol.%.

Überraschenderweise wurde nun gefunden, daß optische Elemente aus bestimmten Kompositmaterialien mit hoher Präzision und Endform-nahen Abmessungen nach einem speziellen Verfahren mit außerordentlich geringer Schrumpfung (maximal 3 bis 5 Vol.%) geprägt werden können.

In der EP-A-195493 werden transparente Gegenstände beschrieben, die auf einem transparenten Substrat eine transparenten Beschichtung aus einer organischen Siliciumverbindung, einem polyfunktionellen Epoxidharz und Antimonoxid-Teilchen mit einer durchschnittlichen Teilchengröße von 1 bis 200 nm aufweisen. Die transparenten Gegenstände eignen sich für Brillen, Kameralinsen und andere optische Gegenstände, die unter anderem verbesserte Kratz- und Abriebbeständigkeit aufweisen.

US-A-4114983 betrifft optische Elemente aus einem Polymermaterial mit einer mikrostrukturierten Oberfläche, wobei durch Einhalten einer bestimmten Peak-Amplitude und eines bestimmten Verhältnisses von Peak-Amplitude zu Peak-Abstand der Mikrostruktur Antireflex-Eigenschaften erzielt werden. Bei den optischen Elementen handelt es sich um homogene Gegenstände, deren mikrostrukturierte Oberfläche durch Prägung mit einem Prägestempel mit geätzter Oberfläche erhalten wird.

US-A-4758296 offenbart ein Verfahren zur Herstellung von Oberflächenrelief-Hologrammen, bei dem z.B. ein Oberflächenrelief-Hologramm-Master mit Hilfe eines UV-härtbaren Klarlacks auf einen Polyesterfilm-Träger laminiert wird. Nach Abziehen des Masters bleibt die geprägte, gehärtete Lackschicht auf dem Träger zurück. Das UV-härtbare Lackharz wird so gewählt, daß eine möglichst geringe Schrumpfung während der Härtung erfolgt.

Gegenstand der Erfindung ist ein wie in Anspruch 1 definiertes Verfahren zur Herstellung von optischen Elementen mit einer Schicht aus einem transparenten Kompositmaterial, die eine Oberfläche mit einer Prägestruktur aufweist. Ein weiterer Gegenstand der Erfindung ist ein nach diesem Verfahren erhältliches optisches Element, wie in Anspruch 9 definiert.

Als Polymermatrix eignen sich beliebige für optische Anwendungen bekannte transparente Kunststoffe, z.B. Polyacrylsäure, Polymethacrylsäure, Polyacrylate, Polymethacrylate, Polyolefine, Polystyrol, Polyamide, Polyimide, Polyvinylverbindungen, wie Polyvinylchlorid, Polyvinylalkohol, Polyvinylbutyral, Polyvinylacetat und entsprechende Copolymere, z. B. Poly(ethylen-vinylacetat), Polyester, z. B. Polyethylenterephthalat oder Polydiallylphthalat, Polyarylate, Polycarbonate, Polyether, z. B. Polyoxymethylen, Polyethylenoxid oder Polyphenylenoxid, Polyetherketone, Polysulfone, Polyepoxide, Fluorpolymere, z. B. Polytetrafluorethylen, und Organopolysiloxane.

In diese Polymermatrix ist ein relativ "steifes" dreidimensionales Gerüst aus anorganischen oder organischmodifizierten anorganischen Komponenten in Form von nanoskaligen Partikeln eingebaut.

Bei den nanoskaligen Partikeln handelt es sich z. B. um Oxide (einschließlich Oxid-hydrate, Oxid/Hydroxide und Hydroxide) und andere Chalkogenide, wie Sulfide, Selenide und Telluride; Halogenide (Fluoride, Chloride, Bromide oder Iodide); Antimonide; Arsenide; Carbide; Nitride; Phosphide; Phosphate; Silicate; Zirkonate; Aluminate; Stannate; oder entsprechende Mischoxide.

Spezielle Beispiele sind Oxide wie ZnO, CdO, SiO₂, TiO₂, ZrO₂, CeO₂, SnO₂, Al₂O₃, In₂O₃, La₂O₃, Fe₂O₃, NiO, Cu₂O; V₂O₅, MoO₃ oder WO₃; Sulfide wie CdS, ZnS, PbS oder Ag₂S; Selenide wie GaSe, CdSe oder ZnSe; und Telluride wie ZnTe oder CdTe; Halogenide wie AgCl, AgBr, AgI, CuCl, CuBr, CdI₂ oder PbI₂; Carbide wie CeC₂ oder SiC; Arsenide wie AlAs, GaAs oder GeAs; Antimonide wie InSb; Nitride wie BN, AlN, Si₃N₄ oder Ti₃N₄; und Phosphide wie GaP, InP, Zn₃P₂ oder Cd₃P₂; sowie Mischoxide mit Perowskit-Struktur wie BaTiO₃, PbTiO₃ der PbTiO₃

Die Herstellung dieser nanoskaligen Partikel kann auf übliche Weise erfolgen, z. B. durch Flammpyrolyse und Plasmaverfahren [siehe A.N. Dubrovina et al., Kristallografiya. 26 (1981) 637-639], Kolloidtechniken [siehe E. Matijevic, "Preparation and Interactions of Colloids of Interest in Ceramics" in "Ultrastructure Processing of Advanced Ceramics, Eds.: J.D. Mackenzie, D.R. Ulrich, John Wiley & Sons, New York (1988) 429, und andere Publikationen von E. Matijevic et al.], Sol-Gel-Prozesse [siehe R. Naß, H. Schmidt, Journal of Non-Crystalline Solids 121 (1990) 329-333; M.A. Anderson et al., Journal of Membrane Science, 39 (1988) 243-258], kontrollierte Nucleations- und Wachstumsprozesse [siehe L. Spanhel und M.A. Anderson, J. Amer. Chem. Soc. 113 (1991) 2826-2833], MOCVD-Verfahren [siehe G.B. Springfellow "Organometallic Vapor Phase Epitaxy: Theory and Practice", Academic Press, New York (1989] und Emulsionsverfahren [siehe DE 4118185 A1].

Die angewandten nanoskaligen Partikel haben eine Teilchengröße von 0,5 bis 20 nm, vorzugsweise 2 bis 20 nm. Der Volumenanteil der anorganischen bzw. organischmodifizierten anorganischen Komponente in den Kompositmaterialien beträgt gewöhnlich 5 bis 80 Vol.%, vorzugsweise 10 bis 50 Vol.% und insbesondere 20 bis 30 Vol.%. Den restlichen Volumenanteil macht im wesentlichen die Polymermatrix aus.

Bei den erfindungsgemäßen optischen Elementen besteht zumindest die zu prägende Oberflächenschicht aus dem genannten Kompositmaterial. Diese Oberflächenschicht kann sich auf einem für optische Anwendungen geeigneten Substrat befinden, das z. B. aus Glas, Keramik, Silicium, Metall, Halbleiter-Materialien oder Kunststoffen bestehen kann.

Das Substrat hat vorzugsweise eine Oberfläche von optischer Qualität (Rauhigkeit vorzugsweise < 50 nm). Zur Verbesserung der Haftung der zu prägenden Oberflächenschicht kann das Substrat z. B. mit einem Primer oder einem Haftvermittler (Silane etc.) vorbehandelt werden.

Je nach Anwendungszweck kann die geprägte Oberfläche der optischen Elemente mit einer weiteren Schicht versehen sein, z. B. einer Metallschicht, Schutzschicht oder anderen funktionellen Schicht, um eine erhöhte Reflexion oder andere Effekte (z. B. Absorption spezieller chemischer Substanzen) zu erzielen.

Bei der thermisch oder photochemisch polymerisierbaren oder härtbaren Verbindung handelt es sich in der Regel um ein polymerisierbare ungesättigte Gruppen aufweisendes Monomer, Oligomer oder Prepolymer, das bei der thermisch oder photochemisch initiierten Polymerisation bzw. Härtung eines der oben genannten transparenten Polymeren ergibt.

Diese Verbindung kann entweder als solche oder vorzugsweise als Lösung in einem organischen Lösungsmittel eingesetzt werden. Beispiele für geeignete Lösungsmittel sind Alkohole, Ketone und Ester.

Zusätzlich zu der polymerisierbaren bzw. härtbaren Verbindung kann eine Lösung eines in organischen Lösungsmitteln löslichen transparenten Polymeren zugegeben werden, wobei der Anteil dieses Polymeren im Falle der Verwendung mindestens 1 Gewichtsprozent und maximal 95 Gewichtsprozent, vorzugsweise maximal 50 Gewichtsprozent, bezogen auf die Gesamtmenge von Polymer und polymerisierbarer bzw. härtbarer Verbindung, beträgt.

Die genannten Ausgangskomponenten für die Polymermatrix werden mit einem Sol von nanoskaligen Partikeln in einem organischen Lösungsmittel vermischt. Das hierbei verwendete Lösungsmittel ist entweder identisch mit dem für die Polymerkomponenten verwendeten Lösungsmittel oder damit mischbar.

Das Sol von nanoskaligen Partikeln kann entweder aus vorgefertigten Partikeln hergestellt werden (z. B. durch Ultraschall-Dispersion) oder aber diese werden in situ hergestellt, z. B. durch Sol-Gel-Reaktion von hydrolysierbaren und kondensierbaren Verbindungen von Elementen der Hauptgruppen III bis V (vorzugsweise III und IV), der Nebengruppen III bis VI der Periodensystems und/oder von Lanthaniden-Elementen.

Bei den hydrolysierbaren und kondensierbaren Ausgangsverbindungen handelt es sich vorzugsweise um solche von Si, Al, B, Pb, Sn, Ti, Zr, V und Zn, insbesondere solche von Si, Al, Ti und Zr oder Mischungen davon. Hierzu sei angemerkt, daß selbstverständlich auch andere hydrolysierbare Verbindungen eingesetzt werden können, insbesondere solche von Elementen der Hauptgruppen I und II des Periodensystems (z.B. Na, K, Ca und Mg) und der Nebengruppen VII und VIII des Periodensystems (z.B. Mn, Fe, Co und Ni). Auch hydrolysierbare Verbindungen der Lanthaniden können eingesetzt werden. Vorzugsweise machen die soeben genannten Verbindungen aber nicht mehr als 20 und insbesondere nicht mehr als 10 Mol-% der insgesamt eingesetzten hydrolysierbaren monomeren Verbindungen aus.

Beispiele für hydrolysierbare Gruppen in den Ausgangsverbindungen (die nicht notwendigerweise als monomere Verbindungen, sondern bereits als entsprechende Vorkondensate eingesetzt werden können) sind Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl).

Neben den oben genannten hydrolysierbaren Gruppen können als weitere ebenfalls geeignete Gruppen erwähnt werden Wasserstoff und Alkoxyreste mit 5 bis 20, insbesondere 5 bis 10 Kohlenstoffatomen und Halogen- und Alkoxysubstituierte Alkoxygruppen (wie z.B. β-Methoxyethoxy).

Da die hydrolysierbaren Gruppen im Endprodukt praktisch nicht mehr vorhanden sind, sondern durch Hydrolyse verlorengehen, wobei das Hydrolyseprodukt früher oder später auch in irgendeiner geeigneten weise entfernt werden muß, sind solche hydrolysierbare Gruppen besonders bevorzugt, die keine Substituenten tragen und zu Hydrolyseprodukten mit niedrigem Molekulargewicht, wie z.B. niederen Alkoholen, wie Methanol, Ethanol, Propanol, n-, iso-, sek- und tert-Butanol, führen. Die letztgenannten Gruppen sind auch deshalb bevorzugt, da sie bei der Hydrolyse den pH-Wert praktisch nicht beeinflussen (im Gegensatz zu z.B. Halogen), was von Vorteil ist, weil der pH-Wert der Ausgangsmischung vorzugsweise im Bereich von 4 bis 9, insbesondere 5 bis 6,5, liegt und Hydrolyseprodukte, die den pH-Wert merklich aus diesem Bereich heraus verschieben, vorzugsweise durch Zugabe geeigneter Substanzen (Säuren oder Basen) neutralisiert werden.

Die nicht-hydrolysierbaren Gruppen der eingesetzten Verbindungen werden vorzugsweise ausgewählt aus Alkyl (insbesondere C₁₋₄-Alkyl, wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie Acetylenyl und Propargyl) und Aryl (insbesondere C₆₋₁₀-Aryl, wie z.B. Phenyl und Naphthyl), wobei die soeben genannten Gruppen gegebenenfalls einen oder mehrere Substituenten, wie z.B. Halogen, Hydroxy, Alkoxy, Epoxy, gegebenenfalls substituiertes Amino usw. aufweisen können. Die obigen Alkylreste schließen auch die entsprechenden cyclischen und Aryl-substituierten Reste, wie z.B. Cyclohexyl und Benzyl, ein, während die Alkenyl- und Alkinylgruppen ebenfalls cyclisch sein können und die genannten Arylgruppen auch Alkarylgruppen (wie Tolyl und Xylyl) mit einschließen sollen. Besonders bevorzugte nicht-hydrolysierbare Gruppen sind solche, die über eine (mehrfach) ungesättigte Kohlenstoff-Kohlenstoff-Bindung verfügen. In diesem Zusammenhang sind insbesondere zu erwähnten Gruppen, die über einen (Meth)acryloxyrest verfügen, insbesondere einen(Meth)acryloxy-C₁₋₄-alkylrest wie z.B. (Meth)acryloxypropyl. Die Anwesenheit derartiger ungesättigter Gruppen hat den Vorteil, daß nach dem Auftragen der Kompositmaterialien auf ein Substrat eine zweifache Härtung erfolgen kann, nämlich eine thermisch oder photochemisch induzierte Verknüpfung der ungesättigten organischen Reste durch (radikalische) Polymerisation und eine thermische Vervollständigung der Polykondensation (z.B. durch Wasserabspaltung aus noch vorhandenen Zentralatom-OH-Gruppen).

Erfindungsgemäß wird es demnach bevorzugt, wenn 1 bis 100, insbesondere 5 bis 85 und besonders bevorzugt 20 bis 70 Mol-% der nicht-hydrolysierbaren Gruppen mindestens eine Kohlenstoff-Kohlenstoff-Doppel- oder Dreifachbindung aufweisen.

Insbesondere bei Verbindungen, die im Vergleich zu Siliciumverbindungen bei der Hydrolyse sehr reaktiv sind (z.B. Verbindungen von Al, Zr und Ti) kann es sich empfehlen, die entsprechenden Ausgangsverbindungen in komplexierter Form einzusetzen, um eine spontane Ausfällung der entsprechenden Hydrolysate nach Wasserzugabe zu vermeiden. Als Komplexbildner eignen sich insbesondere organische (gegebenenfalls ungesättigte) Carbonsäuren (z.B. Alkansäuren wie Essigsäure, Propionsäure und Stearinsäure, oder Alkensäuren wie Acrylsäure, Methacrylsäure und Ölsäure), β-Diketone (z.B. Acetylaceton) und β-Carbonylcarbonsäureester (wie z.B. Acetessigsäureethylester). Es können aber auch alle anderen auf diesem Gebiet bekannten Komplexbildner eingesetzt werden, z. B. primäre, sekundäre oder tertiäre Amine wie Allylamine, Ethylendiamin und Diethylentriamin.

Gegebenenfalls kann die zu hydrolysierende Verbindung (z.B. Aluminiumverbindung) in Mischung mit dem Komplexbildner eingesetzt werden; d.h. die Komplexierung erfolgt in situ.

Durch Einsatz einer komplexierten Ausgangsverbindung von z.B. Al, Ti oder Zr in Kombination mit einer reaktionsträgeren Verbindung, z. B. einem Alkoxysilan wie 3-Methacryloxypropyltrimethoxysilan, ist es möglich, eine gezielt einstellbare Teilchengröße der Al-, Ti- oder Zr-Partikel zu erhalten.

Die Hydrolyse und Kondensation kann auf die für Sol-Gel-Reaktionen übliche Art und Weise erfolgen. Bei reaktionsträgen Ausgangsverbindungen (z. B. Siliciumverbindungen) kann die Hydrolyse in den meisten Fällen dadurch erfolgen, daß man der oder den zu hydrolysierenden Verbindungen, die entweder als solche oder gelöst in einem geeigneten Lösungsmittel vorliegen, Wasser bei Raumtemperatur oder unter leichter Kühlung direkt zugibt (vorzugsweise unter Rühren) und die resultierende Mischung daraufhin einige Zeit (einige Minuten bis einige Stunden) rührt. Bei Anwesenheit der reaktiveren Verbindungen von z.B. Al, Ti und Zr empfiehlt sich in der Regel eine stufenweise Zugabe des Wassers. Unabhängig von der Reaktivität der anwesenden Verbindungen erfolgt die Hydrolyse in der Regel bei einer Temperatur nicht über 50°C, vorzugsweise zwischen 0°C und 30°C bzw. dem Siedepunkt des gegebenenfalls eingesetzten Lösungsmittels. Prinzipiell muß kein Lösungsmittel eingesetzt werden, insbesondere dann, wenn es sich bei den hydrolysierbaren Gruppen um solche handelt, die bei der Hydrolyse zur Bildung von Alkoholen, wie z.B. Methanol, Ethanol, Propanol und Butanol, führen. Andernfalls sind geeignete Lösungsmittel z.B. die soeben genannten Alkohole sowie Ether, vorzugsweise niedere Dialkylether wie Diethylether und Dibutylether und THF, aromatische Kohlenwasserstoffe (z.B. Toluol), Ester wie Essigsäureethylester, und insbesondere Butoxyethanol.

Bezüglich der insgesamt für die Hydrolyse zu verwendenden Wassermenge sei bemerkt, daß es besonders bevorzugt ist, wenn das Molverhältnis von gesamtem zugegebenem Wasser zu hydrolysierbaren Gruppen in allen eingesetzten Ausgangsverbindungen im Bereich von 1:1 bis 0,3:1, insbesondere 0,7: bis 0,5:1 liegt.

Die Hydrolyse und Kondensation wird soweit geführt, daß ein Sol mit Partikeln im angegebenen Teilchengrößenbereich von 0,5 bis 20 nm vorliegt.

Die auf das Substrat aufzutragende Mischung enthält ferner einen Polymerisationsinitiator, der die Polymerisation und Härtung der ungesättigten Verbindung thermisch und/oder photochemisch induzieren kann.

Als Photoinitiatoren können z.B. die im Handel erhältlichen Starter eingesetzt werden. Beispiele hierfür sind Irgacure^{R} 184 (1-Hydroxycyclohexylphenylketon), Irgacure ^{R} 500 (1-Hydroxycyclohexylphenylketon, Benzophenon) und andere von der Firma Ciba-Geigy erhältliche Photoinitiatoren vom Irgacure^{R}-Typ; Darocur^{R} 1173-, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon.

Als thermische Initiatoren kommen u.a. organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele für derartige thermische Initiatoren sind Dibenzoylperoxid, tert.-Butylperbenzoat und Azobisisobutyronitril.

Der Polymerisationsinitiator wird gewöhnlich in einer Menge von 0,1 bis 5, vorzugsweise 0,5 bis 3 Gewichtsprozent, bezogen auf die Mischung, angewandt.

Die Mischung kann gegebenenfalls andere bei optischen Systemen übliche Additive enthalten, z. B. den Brechungsindex oder andere optische Eigenschaften beeinflussende Substanzen, wie Farbstoffe. photochrome und thermochrome Stoffe.

Die erhaltene Mischung kann entweder als solche oder nach teilweiser oder nahezu vollständiger Entfernung des verwendeten Lösungsmittels bzw. des während der Reaktion gebildeten Lösungsmittels (z.B. der durch Hydrolyse der Alkoxide entstandenen Alkohole) oder aber nach Zugabe eines geeigneten Lösungsmittels zwecks Viskositätserniedrigung auf das Substrat aufgebracht werden.

Die Beschichtung kann nach üblichen Methoden erfolgen, z.B. durch Tauchen, Fluten, Rakeln, Gießen, Schleudern, Spritzen oder Aufstreichen. Besonders bevorzugt werden erfindungsgemäß das Rakeln, Spritzen und Schleudern.
Die aufgetragene Zusammensetzung wird vorzugsweise (bei Raumtemperatur oder leicht erhöhter Temperatur) getrocknet. Bevorzugte Schichtdicken (im getrockneten Zustand) liegen bei 0,2 bis 30 µm. Diese Werte können jedoch insbesondere bei Mehrfachbeschichtungen entsprechend darüber liegen.

Nach der gegebenenfalls vorgenommenen Trocknung wird der auf das Substrat aufgebrachte Überzug in Abhängigkeit von der Art des verwendeten Polymerisationsinitiators thermisch und/oder durch Bestrahlung (z.B. mit einem UV-Strahler, einem Laser, usw.) gehärtet und gleichzeitig mit einem Prägestempel geprägt.

Die Härtungsbedingungen (Temperatur, UV-Wellenlänge, etc.) richten sich nach den Zerfallsbedingungen des Polymerisationsinitiators. Die thermische Härtung erfolgt gewöhnlich bei Temperaturen unter 350°C, vorzugsweise unter 150°C.

Die Wärmezufuhr kann über den Prägestempel, das Substrat, induktiv oder z. B. durch IR-Lampen erfolgen. Die Bestrahlung mit UV-Licht oder sichtbarem Licht erfolgt vorzugsweise durch ein lichtdurchlässiges Substrat hindurch. Bei Verwendung entsprechend lichtdurchlässiger Prägestempel kann jedoch auch hierdurch bestrahlt werden.

Die Härtung kann mehrstufig durchgeführt werden, z. B. als Vorhärtung während der Prägung, gefolgt von einer Aushärtung nach Abnehmen des Prägestempels. Gegebenenfalls kann auch vor dem Aufbringen des Prägestempels eine Vorhärtung der Oberfläche durchgeführt werden, um eine höhere Viskosität zu erzielen.

Es können handelsübliche Prägestempel z. B. aus Metall, Glas, Keramik oder Kunststoffen angewandt werden, welche das gewünschte Prägemuster in Form von Linien, Punkten, Bildmustern etc. aufweisen.

Der anzuwendende Prägedruck richtet sich nach der Viskosität der ungehärteten Oberfläche und der jeweiligen Struktur des Prägestempels.

Die erfindungsgemäßen optischen Elemente zeichnen sich durch minimale Schrumpfung beim Prägungs/Härtungsvorgang aus. Es handelt sich um sogenannte "near net shape"-Materialien.

Die hergestellten Elemente eignen sich z. B. als optische Beugungsgitter, Interferometer, Fresnel-Linsen, Ein/Auskoppelgitter für integrierte Optik, optische Filter, Koppler, Verzweiger, Multiplexer, Streifen-Wellenleiter, optische Schalter und Sensoren, CD-Platten, Bragg-Spiegel und holographische Elemente.

### Beispiel 1

1 Mol 3-Methacryloxypropyltrimethoxysilan (MEMO) wird 1 Stunde bei 50°C in 3 Mol Methanol mit 1,5 Mol bidestilliertem Wasser umgesetzt. Nach Kühlen unter 0°C werden 0,1 bis 0,3 Mol Zirkoniumtecrapropylat zusammen mit 0,1 bis 0,6 Mol Methacrylsäure zugegeben. Nach 1,5 Stunden werden, nach Kontrolle des Wassergehaltes, bis zu 0,6 Mol bidestilliertes Wasser zugegeben und es wird 12 Stunden bei Raumtemperatur gerührt.

Zum Beschichten von Substraten, hier Kieselglas, werden dem so erhaltenen Lack 0,2 bis 2 Gew.-%, vorzugsweise 1 Gew.-% Photoinitiator zugesetzt. Die Wahl des Photoinitiators orientiert sich am Emissionsspektrum der verwendeten UV-Lampen, die zum Aushärten der Schicht benutzt werden. Bei UV-Lampen, die Strahlung im Bereich von 250 nm aussenden, wird als Photoinitiator z.B. Irgacure 184 (Ciba-Geigy) eingesetzt. Der so erhaltene Lack kann mit Membranfiltern von 0,2 bis 0,8 µm Porenweite filtriert werden. Als Beschichtungsarten eignen sich z.B. Rakeln, Tauchen, Schleudern und Spritzen, wobei zur Einstellung optimaler lacktechnischer Parameter (beispielweise der Viskosität) wasserlösliche Lösungsmittel wie 2-Propanol zugesetzt werden können.

Auf die beschichteten Substrate (Schichtdicken im Bereich von 0,2 bis 10 µm) wird in einer speziellen Anordnung der Prägestempel aufgesetzt und mit einer definierten Kraft von 10 bis 200 Newton (bei einer Stempelfläche von ca. 3 cm²) während der ersten Stufe des Aushärtprozesses aufgedrückt. Dabei wird durch Bestrahlung mit UV-Licht die Polymerisation der vorhandenen ungesättigten organischen Gruppen bewirkt. Die UV-Quelle ist hierbei unterhalb des Substrates angeordnet, so daß die Strahlung durch das Kieselglas auf die Lackschicht auftrifft. Mit der hier verwendeten 100 Watt UV-Lichtquelle sind Bestrahlungszeiten von 15 bis 40 Minuten ausreichend zur partiellen Aushärtung der Schicht.

Nach dem Ablösen des Prägestempels wird zur Vervollständigung der Polymerisation eine Nachhärtung der beschichteten Substrate in einer Durchlaufbestrahlungsapparatur mit einer Geschwindigkeit von 0,5 bis 2 m/min, vorzugsweise 1 m/min, unter 1 oder 2 UV-Röhren mit je 1200 Watt Leistung durchgeführt, wonach der Lack fingertrocken ist.

Die letzte Stufe des Aushärtens besteht aus einer 1-stündigen Behandlung bei 130°C in einem Umlufttrockenschrank.

### Beispiel 2

1 Mol MEMO wird mit 1,5 Mol bidestilliertem Wasser versetzt und die resultierende Mischung wird danach 12 bis 50 Stunden bei Raumtemperatur gerührt.

Der Lack wird wie in Beispiel 1 gefiltert, mit Photoinitiator versetzt und eventuell verdünnt.

Die anschließende Beschichtung, der Prägevorgang und die Aushärtung werden analog zum Beispiel 1 durchgeführt.

### Beispiel 3

Es wird der gleiche Lack wie in Beispiel 1 verwendet, jedoch statt des UV-Photoinitiators 0,5 bis 5 Gew.-%, vorzugsweise 0,5 bis 2 Gew.-%, eines thermischen Starters, z.B. tert-Butoxyperbenzoat, zugesetzt. Die gesamte Aushärtung wird während des Prägeprozesses in einer Heizvorrichtung bei 130°C innerhalb 1 Stunde durchgeführt.

### Beispiel 4

Es wird der gleiche Lack wie in Beispiel 2 zur Prägeprozedur mit rein thermischer Aushärtung wie in Beispiel 3 verwendet.

### Beispiel 5

Es wird wie in Beispiel 1 verfahren, jedoch anstelle des UV-Photoinitiators ein solcher eingesetzt, der im nahen UV bis sichtbaren Bereich des Spektrums absorbiert (z.B. Irgacure 369), so daß Glassubstrate anstelle von Kieselglas verwendet werden können.

### Beispiel 6

Es wird wie in Beispiel 2 verfahren, allerdings wird nach erfolgter Synthese 10-30% Methylmethacrylat (MMA) zugesetzt.

### Beispiel 7

### 7.1 ZnO-Sol Herstellung

0,1 M Zinkacetat-dihydrat werden bei 80°C in Ethanol gelöst. Nach vollständiger Auflösung des Zn(Ac)₂·2H₂O wird die Temperatur auf 85°C erhöht und für die Dauer von 3 h 20' (gemessen ab vollständiger Auflösung des Zinkacetats) destilliert. Die Destillationsbedingungen werden so eingestellt, daß etwa während der oben angegebenen Reaktionszeit 650 ml des Lösungsmittels überdestilliert werden. Die verbleibenden 100 ml des Ansatzes werden mit Ethanol auf 750 ml aufgefüllt und im Kühlschrank abgekühlt. Der so gekühlte Ansatz wird mit 0,014 M Lithiumhydroxid-monohydrat versetzt und im Ultraschallbad hydrolysiert. Dabei wird mit Eis gekühlt, so daß der Ansatz maximal die Raumtemperatur erreicht. Das so hergestellte Sol wird über einen Glasfaserfilter abgesaugt und am Rotationsverdampfer bei Raumtemperatur, ca. 30 mbar bis auf 100 ml abrotiert. Die resultierende optisch transparente Lösung enthält etwa 8 Gew.-% ZnO. Der mittlere Clusterdurchmesser beträgt etwa 3 nm.

### 7.2 Herstellung des Polymethylmethacrylat/ZnO-Komposits

20 g Polymethylmethacrylat werden in 100 ml Methacrylsäuremethylester unter Rühren aufgelöst. Dieser Lösung wird Ethanol zugesetzt (60 Vol.-%). Das ZnO-Sol wird nun tropfenweise der MMA/Ethanol PMMA-Lösung unter starkem Rühren mittels Tropftrichter zugegeben. Die resultierende Lösung ist optisch transparent. Der Gewichtsgehalt des Zinkoxids in diesen Lösungen kann zwischen 5 und 60 % eingestellt werden, ohne daß die optische Transparenz beeinträchtigt wird. Anschließend wird das Polymer-ZnO-Gemisch auf verschiedene Substrate (Kieselglas, Polymere bzw. Keramiken) wie in den vorangehenden Beispielen aufgebracht und geprägt und gehärtet.

## Patentansprüche

1. Verfahren zur Herstellung von optischen Elementen mit einer Schicht aus einem transparenten Kompositmaterial, die eine Oberfläche mit einer Prägestruktur aufweist, **dadurch gekennzeichnet, daß** man
a) eine thermisch oder photochemisch zu einem transparenten Polymer polymerisierbare oder härtbare Verbindung zur Verringerung der thermischen Schrumpfung mit einem Sol von anorganischen oder organisch-modifizierten anorganischen Komponenten in Form von nanoskaligen Partikeln mit einer Teilchengröße von 0,5 bis 20 nm in einem organischen Lösungsmittel und einem Polymerisationsinitiator vermischt,
b) die Mischung gegebenenfalls nach Einstellen einer geeigneten Viskosität auf ein Substrat aufträgt und gegebenenfalls trocknet,
c) den erhaltenen Überzug unter gleichzeitiger thermischer oder photochemischer Polymerisation und Härtung mit einem Prägestempel prägt und
d) gegebenenfalls eine Nachhärtung durchführt.

2. Verfahren nach Anspruch 1, **dadurch gekennzeichnet, daß** als thermisch oder photochemisch zu einem transparenten Polymer polymerisierbare oder härtbare Verbindung eine Verbindung verwendet wird, die eine Polymermatrix aus Poly(meth)acrylsäure, Poly(meth)acrylaten, Polyolefinen, Polystyrol, Polyamiden, Polyimiden, Polyvinylverbindungen, Polyestern, Polyarylaten, Polycarbonaten, Polyethern, Polyetherketonen, Polysulfonen, Polyepoxiden, Fluorpolymeren oder Organopolysiloxanen ergibt.

3. Verfahren nach Anspruch 1 oder 2 , **dadurch gekennzeichnet, daß** nanoskalige Partikel aus der Gruppe der Oxide, Sulfide, Selenide, Telluride, Halogenide, Carbide, Arsenide, Antimonide, Nitride, Phosphide, Phosphate, Silicate, Titanate, Zirkonate, Stannate, Aluminate oder entsprechende Mischoxide verwendet werden.

4. Verfahren nach einem der Ansprüche 1 bis 3, **dadurch gekennzeichnet, daß** die nanoskaligen Teilchen in situ durch Hydrolyse und Kondensation von Verbindungen von Elementen der Hauptgruppen III bis V, der Nebengruppen III bis VI des Periodensystems, Zink und/oder Lanthaniden-Elementen hergestellt werden.

5. Verfahren nach einem der Ansprüche 1 bis 4, **dadurch gekennzeichnet, daß** in Schritt (a) eine Lösung der thermisch oder photochemisch polymerisierbaren oder härtbaren Verbindung in einem organischen Lösungsmittel angewandt wird.

6. Verfahren nach Anspruch 5, **dadurch gekennzeichnet, daß** der Mischung in Schritt a) außerdem ein in organischen Lösungsmitteln lösliches transparentes Polymer zugegeben wird.

7. Verfahren nach einem der Ansprüche 1 bis 6, **dadurch gekennzeichnet, daß** das Substrat vor Auftragen der Mischung mit einem Primer grundiert wird.

8. Verfahren nach einem der Ansprüche 1 bis 7, **dadurch gekennzeichnet, daß** die geprägte Oberfläche mit einer Metallschicht und/oder Schutzschicht versehen wird.

9. Optische Elemente aus einem Substrat und einer darauf aufgebrachten Schicht mit geprägter Oberfläche aus einem transparenten Kompositmaterial, das zur Verringerung der thermischen Schrumpfung anorganische oder organisch-modifizierte anorganische Komponenten in Form von nanoskaligen Partikeln mit einer Teilchengröße von 0,5 bis 20 nm in einem transparenten Polymer enthält.

10. Optische Elemente nach Anspruch 9, **dadurch gekennzeichnet, daß** das Substrat vor Aufbringen der Schicht mit einem Primer grundiert worden ist.

11. Optische Elemente nach Anspruch 9 oder 10, **dadurch gekennzeichnet, daß** die geprägte Oberfläche mit einer Metallschicht und/oder Schutzschicht versehen ist.

## Claims

1. A process for preparing optical elements with a layer made of a transparent composite materal, said layer having a surface with an embossed structure, **characterized in that**
a) in order to reduce thermal shrinkage, a compound, which can be polymerized or cured thermally or photochemically into a transparent polymer, is mixed with a sol of inorganic or organically modified inorganic components in the form of nanoscale particles having a particle size of from 0.5 to 20 nm in an organic solvent and a polymerization initiator,
b) the mixture is applied on a substrate, optionally after adjusting a suitable viscosity, and is optionally dried,
c) the coating obtained is embossed with a punch while simultaneously polymerizing and curing thermally or photochemically and
d) optionally a post-curing is conducted.

2. The process of claim 1, wherein, as the compound which can be polymerized or cured thermally or photochemically into a transparent polymer, a compound is used which provides a polymer matrix selected from poly(meth)acrylic acid, poly-(meth)acrylates, polyolefins, polystyrene, polyamides, polyimides, polyvinyl compounds, polyesters, polyarylates, polycarbonates, polyethers, polyether ketones, polysulphones, polyepoxides, fluoropolymers and organo-polysiloxanes.

3. The process of claim 1 or 2, wherein nanoscale particles selected from oxides, sulfides, selenides, tellurides, halogenides, carbides, arsenides, antimonides, nitrides, phosphides, phosphates, silicates, titanates, zirconates, stannates, aluminates and corresponding mixed oxides are used.

4. The process of any one of claims 1 to 3, wherein the nanoscale particles are produced in situ by hydrolysis and condensation of compounds of the elements of the main groups III to V, the auxiliary groups III to VI of the periodic system, zinc and/or the lanthanoid elements.

5. The process of any one of claims 1 to 4, wherein in step (a) a solution of the compound which can be polymerized or cured thermally or photochemically in an organic solvent is used.

6. The process of claim 5, wherein additionally a transparent polymer which is soluble in organic solvents is added to the mixture in step (a).

7. The process of any one of claims 1 to 6, wherein the substrate is primed with a primer prior to applying the mixture.

8. The process of any one of claims 1 to 7, wherein the embossed surface is provided with a metal layer and/or protective layer.

9. Optical elements comprising a substrate and, provided thereon, a layer with an embossed surface made of a transparent composite material which for the purpose of reducing thermal shrinkage contains inorganic or organically modified inorganic components in the form of nanoscale particles having a particle size of from 0.5 to 20 nm in a transparent polymer.

10. Optical elements according to claim 9, wherein the substrate has been primed with a primer prior to applying the layer.

11. Optical elements according to claim 9 or 10, wherein the embossed surface is provided with a metal layer and/or protective layer.

## Revendications

1. Procédé de préparation d'éléments optiques portant une couche en matériau composite transparent, qui présente une surface ayant une structure en relief, procédé **caractérisé en ce que** :
a) pour diminuer le retrait thermique, on mélange un composé polymérisable ou durcissable par voie thermique ou photochimique en un polymère transparent, avec un sol de constituants minéraux ou de constituants minéraux à modification organique, sous la forme de particules de l'ordre du nanomètre, ayant une taille de particule de 0,5 à 20 nm, dans un solvant organique et un amorceur de polymérisation,
b) on applique le mélange, éventuellement après réglage à une viscosité appropriée, sur un support et on le fait sécher éventuellement,
c) on forme une empreinte au moyen d'une étampe sur le revêtement obtenu en réalisant simultanément par voie thermique ou photochimique la polymérisation et le durcissement, et
d) on réalise éventuellement un postdurcissement.

2. Procédé selon la revendication 1, **caractérisé en ce que** l'on utilise comme composé polymérisable ou durcissable par voie thermique ou photochimique en un polymère transparent, un composé qui fournit une matrice polymère en poly(acide acrylique ou méthacrylique), polyacrylates ou polyméthacrylates, polyoléfines, polystyrènes, polyamides, polyimides, poly(monomères vinyliques), polyesters, polyarylates, polycarbonates, polyéthers, polyéthercétones, polysulfones, polyépoxydes, polymères fluorés ou organopolysiloxanes.

3. Procédé selon la revendication 1 ou 2, **caractérisé en ce que** l'on utilise des particules de l'ordre du nanomètre qui appartiennent au groupe des oxydes, sulfures, séléniures, tellurures, halogénures, carbures, arséniures, antimoniures, nitrures, phosphures, phosphates, silicates, titanates, zirconates, stannates, aluminates et oxydes mixtes correspondants.

4. Procédé selon l'une quelconque des revendications 1 à 3, **caractérisé en ce que** l'on prépare les particules de l'ordre du nanomètre in situ par hydrolyse et condensation de dérivés d'éléments des groupes principaux III à V du système périodique, d'éléments des sous-groupes III à VI du système périodique, du zinc et/ou d'éléments des lanthanides.

5. Procédé selon l'une quelconque des revendications 1 à 4, **caractérisé en ce que** l'on utilise dans l'étape a) une solution du composé polymérisable ou durcissable par voie thermique ou photochimique dans un solvant organique.

6. Procédé selon la revendication 5, **caractérisé en ce que** l'on ajoute au mélange de l'étape a) en outre un polymère transparent, soluble dans les solvants organiques.

7. Procédé selon l'une quelconque des revendications 1 à 6, **caractérisé en ce que** le support est revêtu d'une couche de fond primaire avant l'application du mélange.

8. Procédé selon l'une quelconque des revendications 1 à 7, **caractérisé en ce que** la surface sur laquelle est formée l'empreinte, est pourvue d'une couche métallique et/ou d'une couche de protection.

9. Eléments optiques constitués d'un support et d'une couche appliquée sur le support, ayant une surface sur laquelle est formée une empreinte, ladite couche étant en un matériau composite transparent qui, pour la diminution du retrait thermique, contient des constituants minéraux ou des constituants minéraux à modification organique, sous la forme de particules de l'ordre du nanomètre, ayant une taille de particule de 0,5 à 20 nm, dans un polymère transparent.

10. Eléments optiques selon la revendication 9, **caractérisés en ce que** le support a été revêtu d'une couche de fond primaire avant l'application de la couche.

11. Eléments optiques selon la revendication 9 ou 10, **caractérisés en ce que** la surface sur laquelle est formée l'empreinte, est pourvue d'une couche métallique et/ou d'une couche de protection.
